Europäisches Patentamt

(19) European Patent Office

Office européen des brevets

(11) Veröffentlichungsnummer: **0 204 150**
**B1**

(12) **EUROPÄISCHE PATENTSCHRIFT**

(45) Veröffentlichungstag der Patentschrift: **11.04.90**

(51) Int. Cl.⁵: **B 62 J 6/00**

(21) Anmeldenummer: **86106001.0**

(22) Anmeldetag: **01.05.86**

(54) Befestigungseinrichtung für Zweiradlampen.

(30) Priorität: **05.06.85 DE 3520237**

(43) Veröffentlichungstag der Anmeldung:
**10.12.86 Patentblatt 86/50**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL SE**

(56) Entgegenhaltungen:
**GB-A- 893**
**GB-A-2 131 149**

(73) Patentinhaber: **ESGE-Marby GmbH + Co. KG.
Braker Strasse 1
D-4800 Bielefeld 16 (DE)**

(72) Erfinder: **Belka, Heinrich
Uchteweg 3
D-4800 Bielefeld 11 (DE)**

(74) Vertreter: **Rüger, Rudolf, Dr.-Ing. et al
Patentanwälte Dr.-Ing. R. Rüger Dipl.-Ing. H.P.
Barthelt Webergasse 3 Postfach 348
D-7300 Esslingen/Neckar (DE)**

Courier Press, Leamington Spa, England.

**Beschreibung**

Die Erfindung geht aus von einer Befestigungseinrichtung für Zweiradlampen mit den Merkmalen des Oberbegriffs des Anspruches 1.

Aus der GB-A-2 131 149 ist eine gattungsgemäße Befestigungseinrichtung für Fahrradlampen bekannt, die aus einer Befestigungsschelle besteht, die an dem Ende, an dem sie an der Strebe des Fahrrades anzubringen ist, ein von zwei Schenkeln begrenztes Maul aufweist. Das Maul wird auf die jeweilige Strebe aufgesteckt und die nun an beiden Seiten über die Strebe ragenden Schenkel werden mittels durch die Schenkel hindurchgehende Klemmschrauben aufeinander zu bewegt. Die Strebe wird durch Verformung der Schenkel zwischen diesen festgeklemmt.

Wenn die Befestigungsschelle wieder abgebaut werden soll, dürfen die Schenkel bei dem Verspannen nichtplastisch verformt werden. Sie müssen nach dem Lösen der Klemmschrauben vielmehr wieder in ihre Ausgangslage zurückkehren, weil sonst der Abstand zwischen den Schenkeln kleiner sein kann als der Strebendurchmesser, und das Maul dann nicht mehr ohne Kraftaufwand in radialer Richtung von der Strebe herunterzuziehen ist. Die Befestigungsschelle muß folglich aus Material mit einer gewissen Mindestelastizität gefertigt werden. Das schließt die Verwendung spröder, aber einfach und kostengünstig zu verarbeitender Strangpreßprofile z.B. aus Leichtmetall aus.

Der größte Durchmesser, den eine zylindrisch Strebe aufweisen darf, damit die Befestigungsschelle noch an ihr angebracht werden kann, wird durch den Abstand zwischen den Schenkeln des Mauls bestimmt. Der kleinste Durchmesser ergibt sich durch den Abstand, den die Schenkel im Bereich der Klemmfläche haben, wenn sie durch die Klemmschrauben so weit aufeinander zu bewegt wurden, daß sie an den freien Enden aneinanderstoßen. Der größte und der kleinste Durchmesser liegen sehr dicht beieinander, so daß für den Strebendurchmesser nur ein enger Toleranzbereich zur Verfügung steht.

Auch bei angepaßtem Strebendurchmesser verträgt diese Schelle keine nennenswerten Drehmomente um die Längsachse der sie tragenden Strebe, ohne mitgedreht zu werden, denn die beiden Schenkel üben hier jeweils nur auf eine sehr kleine Fläche des Strebenumfanges eine Klemmkraft aus.

Ausgehend hiervon ist es Aufgabe der Erfindung, eine Befestigungseinrichtung zu schaffen, deren Befestigungsschelle bei einfacher Herstellung und Montage an Streben mit verschiedenen Durchmessern zu befestigen ist und die größere Drehmomente aufnehmen kann, so daß auch die Befestigung an einer horizontal verlaufenden Strebe möglich ist.

Diese Aufgabe wird erfindungsgemäß durch die Befestigungseinrichtung mit den Merkmalen des Anspruches 1 gelöst.

Im montierten Zustand wird die zwischen den Schenkeln hindurchgehende Strebe durch ein Klemmstück an die Klemmfläche angepreßt, wobei das Klemmstück sich in den Öffnungen der Schenkel abstützt.

Außerdem ergibt sich eine großflächige Anlage zwischen dem Maul der Befestigungsschelle und der jeweiligen Strebe, die nicht nur ohne weiteres ein großes Kippmoment um eine Achse rechtwinklig zur Längsachse der Strebe aushält, sondern die wegen der großen Fläche und der damit verbundenen großen Haftreibung auch verhältnismäßig große Drehmomente um die Längsachse der Strebe aushält. Es werden auch dann große Haltemomente erreicht, wenn die Strebe exakt zylindrisch ist und einen kleinen Durchmesser aufweist.

Die Befestigungsschelle gestattet deshalb insbesondere die Befestigung der Lampe an einer Querstrebe eines Vorder- oder Hinterradgepäckträgers. Dabei ist es außerdem von Vorteil, daß das Maul der Befestigungsschelle sich ohne weiteres an der Anbringungsstelle aufstecken läßt, ohne von einem freien Ende der Strebe her übergestreift werden zu müssen.

Um die Knickbelastung der Strebe, die die Befestigungsschelle trägt, zu verringern, ist die Breite des Mauls vorzugsweise größer als dessen Weite.

Die Keilfläche des Klemmstückes kann eine Planfläche sein. Dadurch wird zwar die Flächenbelastung der Strebe vermindert, ihre Herstellung ist jedoch aufwendiger.

In der Herstellung einfacher ist hingegen ein kegelstumpfförmig ausgebildetes Klemmstück, wobei dessen Mantelfläche die Keilfläche bildet und das vorzugsweise an seinem dickeren Ende in einen zylindrischen Abschnitt gleichen Durchmessers übergeht. Diese Ausbildung weist darüber hinaus den Vorteil auf, daß sie beim Anziehen des Klemmstücks eine geringe Verformung der Strebe und des Klemmkonus an der Berührungsstelle hervorruft, die, ohne die Oberfläche der Strebe zu beschädigen, die Widerstandsfähigkeit der Befestigungsstelle gegen Drehmomente um die Längsachse der Strebe weiter erhöht.

In jedem Falle ist, um eine satte Anlage zwischen dem Klemmstück und der jeweiligen Öffnung zu erreichen, der Querschnitt dieser Öffnung an den Querschnitt des Klemmstücks angepaßt.

Sehr einfach und kostengünstig läßt sich die Befestigungsschelle herstellen, wenn sie von einem entsprechend geformten Strangpreßprofil abzulängen ist. Als Material kommen hierfür Leichtmetalle und vorzugsweise Aluminium bzw. Aluminiumlegierungen in Frage, während das Klemmstück aus vorzugsweise rostfreiem Stahl besteht.

Um die Befestigungsvielfalt der Zweiradlampe zu vergrößern und wahlweise eine Anbringung an einer horizontal oder einer im wesentlichen vertikal verlaufenden Strebe zu ermöglichen, enthält die Befestigungsschelle an ihrem dem Gehäuse zugekehrten Ende zwei zueinander rechtwinklig verlaufende Bohrungen zur Aufnahme einer Befestigungsschraube, wobei jede Bohrung von einer zu ihr rechtwinklig verlaufenden Anlagefläche für eine an dem Gehäuse angebrachte Lasche umgeben ist.

In der Zeichnung ist ein Ausführungsbeispiel des Gegenstandes der Erfindung dargestellt. Es zeigen:

Fig. 1 einen an einem Versteifungsbügel eines Vorderradseitengepäckhalters montierten Fahrradscheinwefer gemäß der Erfindung in perspektivischer Darstellung,

Fig. 2 den Fahrradscheinwerfer nach Fig. 1 in einer vergrößerten perspektivischen Rückansicht und

Fig. 3 die Befestigungsschelle des Fahrradscheinwerfers nach den vorhergehenden Figuren in einer Seitenansicht und teilweise geschnitten.

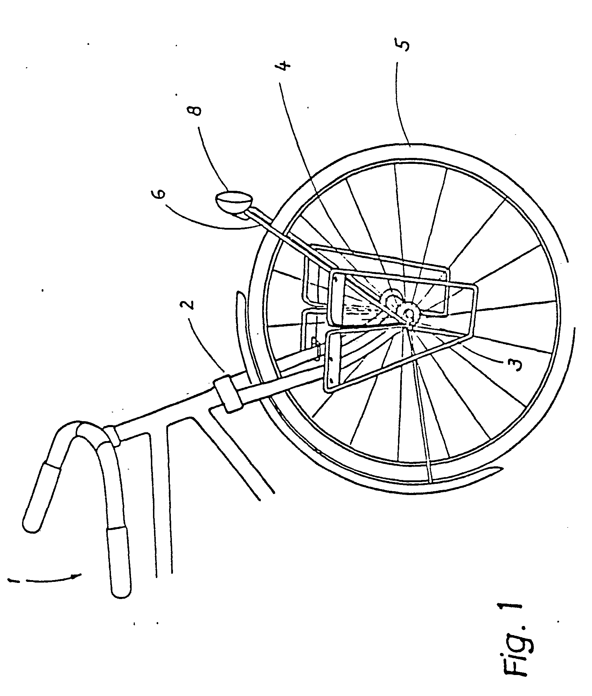

Bei einem in Fig. 1 ausschnittsweise veranschaulichten Fahrrad 1 sind an dessen Vorderradgabel 2 zwei Seitengepäckhalter 3 und 4 montiert, die durch einen ein in der Vorderradgabel 2 gelagertes Vorderrad 5 umgreifenden U-förmigen Bügel 6 verstärkt sind. An einem quer oder horizontal verlaufenden Strebenabschnitt 7 des Bügels 6 ist ein Fahrradscheinwerfer 8 befestigt.

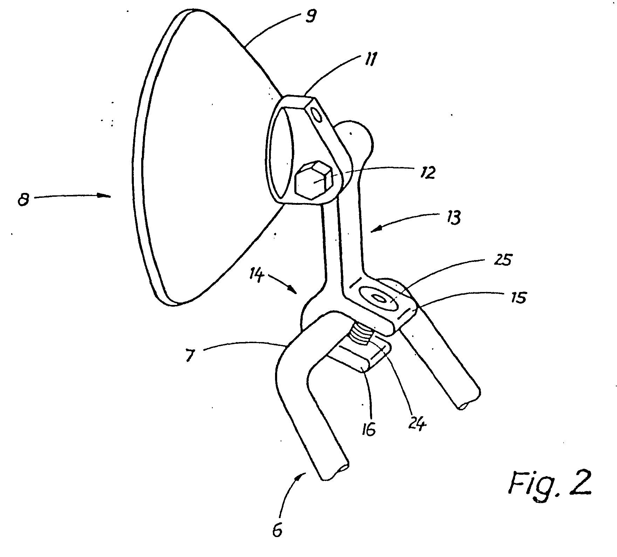

Die Art der Befestigung des Fahrradscheinwerfers 8 an dem Bügel 6 ist in Fig. 2 im einzelnen ersichtlich. Der Fahrradscheinwerfer 8 enthält hiernach ein Gehäuse 9, in dem der Beleuchtungskörper enthalten ist. An der Rückseite des Gehäuses 9 ist eine die Fassung für den Beleuchtungskörper tragende Lasche 11 angeschraubt. Die Lasche 11 ihrerseits ist mittels einer Schraube 12 an einer Befestigungsschelle 13 gehaltert, deren dem Gehäuse 9 abliegendes Ende zur Verankerung an einer Strebe eines Zweiradrahmens oder eines Zweiradzubehörteils eingerichtet ist, wie dies der Verstärkungsbügel 6 darstellt. Dieses von der Befestigungsstelle mit dem Gehäuse abliegende Ende 14 weist ein von zwei Schenkeln 15 und 16 sowie einer dazu quer verlaufenden Klemmfläche 17 begrenztes Maul 18 auf, das, wie die Fig. 2 zeigt, über die entsprechende Strebe 7 gesteckt wird.

Das Maul 18 hat einen etwa U-förmigen Querschnitt, wobei die Schenkel 15 und 16 an ihren einander gegenüberstehenden Innenseiten mit im wesentlichen ebenen Flächen 19 und 20 ausgebildet sind, während die Klemmfläche 17 halbzylindrisch geformt ist. Anstelle der halbzylindrischen Gestalt der Klemmfläche 17 kommt auch eine prismatische Gestaltung in Frage.

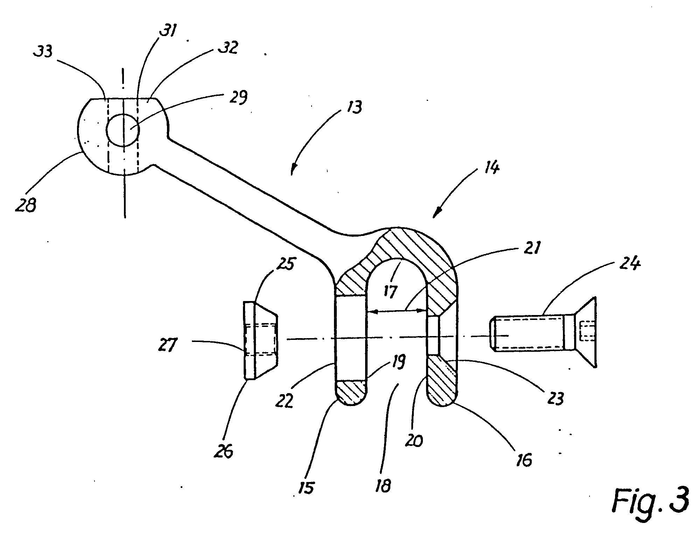

Der Abstand der beiden parallel zueinander verlaufenden Schenkel 15 und 16, d.h. die durch einen Pfeil 21 angedeutete Maulweite entspricht dem Durchmesser der Strebe 7, an der die Befestigungschelle 13 anzuklemmen ist. Die Erstreckung der Schenkel 15, 16 in Richtung der Breite des Maules, d.h., bezogen auf Fig. 3 in Richtung senkrecht zur Zeichenebene, ist vorzugsweise größer als die Weite 21 des Mauls 18, um in Querrichtung der Strebe 7 eine ausreichende Festigkeit zu erhalten.

Beide Schenkel 15, 16 enthalten eine zueinander koaxiale Bohrung 22 bzw. 23, wobei die Bohrung 22 glattwandig zylindrisch ist, während die Bohrung 23 zur Aufnahme einer entsprechenden Senkkopfschraube 24 von außen herkegelförmig angesenkt ist. Die zylindrische Bohrung 22 dient der Aufnahme eines im Durchmesser angepaßten Klemmkonus 25, der an seinem dickeren Ende einen zylindrischen Fortsatz 26 gleichen Durchmessers enthält. Durch den rotationssymmetrischen Klemmkonus verläuft koaxial eine Gewindebohrung 27, in die die Senkschraube 24 mit ihrem Gewindeschaft einschraubbar ist.

An ihrem dem Maul 18 gegenüberliegenden Ende trägt die Befestigungsschelle 13 einen einstückig angeformten Wulst 28, in dem eine Gewindebohrung 29 angebracht ist, deren Längsachse parallel zu der durch die halbzylindrische Klemmfläche 17 definierten Achse verläuft. Die Gewindebohrung 29 ist an ihren beiden Enden mit einer zu der Achse der Bohrung 29 rechtwinklig verlaufenden planen Anlagefläche 31 für die Lasche 11 umgeben.

Um auch eine um 90° gedrehte Anbringung der Lasche 11 an der Befestigungsschelle 13 zu ermöglichen, ist in dem Wulst 28 eine weitere Gewindebohrung 32 vorgesehen, die rechtwinklig zu der Gewindebohrung 29 verläuft. Auch die Gewindebohrung 32 ist von einer planen Anlagefläche 33 für die Lasche 11 umgeben.

Die Befestigung der beschriebenen Fahrradlampe erfolgt in der Weise, daß zunächst an der Befestigungsschelle 13 mittels der Lasche 11 und der durch diese hindurchführenden Schraube 12 das Gehäuse 9 angebracht wird, wobei die Schraube 12 je nach gewünschter Stellung entweder in die Gewindebohrung 29 oder die Gewindebohrung 32 eingedreht wird. Hernach wird die Befestigungsschelle 13 mit dem Maul 18 über die entsprechende Strebe, beispielsweise den Bügel 7, gestülpt. Sobald das geschehen ist, wird, mit der Spitze voran, der Klemmkonus 25 in die zylindrische Bohrung 22 eingesetzt und es wird von der entgegengesetzten Seite her durch die Bohrung 23 hindurch die Senkkopfschraube 24 in die Gewindebohrung 27 des Klemmkonus 25 eingeschraubt. Der Klemmkonus 25 ist dabei mit geringem Spiel mit seinem zylindrischen Ansatz 26 in der zylindrischen Bohrung 22 radial geführt.

Beim Festziehen der Schraube 24 legt sich der Klemmkonus 25 mit seiner Mantelfläche an den Umfang der Strebe 7 an, während er sich mit dem zylindrischen Fortsatz 26 an der gegenüberliegenden Seite in der Bohrung 22 abstützt und ein Mitdrehen des Klemmkonus 25 verhindert wird. Sobald die Schraube 24 angezogen ist, wodurch der Klemmkonus 25 an die Fläche 20 des Schenkels 16 heranbewegt wurde, drückt der sich mit seinem zylindrischen Ansatz 26 in der Bohrung 22 abstützende Klemmkonus 25 die Strebe 7 gegen die halbzylindrisch geformte Klemmfläche 17.

Je nach Materialauswahl bei der Strebe 7 und dem Klemmkonus 25 erfolgt gegebenenfalls eine geringfügige Deformation der Kegelstumpffläche des Klemmkonus 25, der insoweit als Keil wirkt, und/oder der entsprechenden Stelle der eingeklemmten Strebe 7.

Da der Klemmkonus 25 mit Radialspiel in der zylindrischen Bohrung 22 sitzt, erfolgt beim Anziehen der Schraube 24 und dem Anklemmen an die Strebe 7 nahezu keine Verformung der beiden Schenkel 15 und 16 im Sinne einer Verringerung der Weite 21 des Mauls 18. Es ist deshalb auch nicht erforderlich, für die Befestigungsschelle 13 elastisch nachgiebiges Material zu verwenden, sondern es kann verhältnismäßig steifes oder auch sprödes Material eingesetzt werden. Wie sich aus der Fig. 3 ergibt, eignet sich das Querschnittsprofil der Befestigungsschelle 13 zum Strangpressen, so daß die Befestigungsschelle 13 von einem entsprechend abgelängten Strangpreßprofil gebildet wird. Als Materialien hierfür kommen Leichtmetallbzw. Aluminiumlegierungen in Frage, während der Klemmkonus 25 vorzugsweise aus nicht rostendem Stahl besteht.

Die gezeigte Befestigungsschelle 13 gestattet einen weiten Durchmesserbereich für die Strebe 7, der nach oben durch die Weite 21 des Mauls 18 und nach unten durch den kleinsten Abstand des Klemmkonus 25 vom der Klemmfläche 17 begrenzt wird, bei dem der Klemmkonus 25 noch sicher in der Bohrung 22 abgestützt werden kann. In Verbindung mit einer zylindrischen Strebe ergibt sich außerdem eine sehr gute Einstellbarkeit, weil die Befestigungsschelle 13 in jeder beliebigen Winkelposition anzubringen ist. Selbst auf leicht konischen Streben, wie einem Gabelrohr, ist eine zuverlässige Halterung möglich.

**Patentansprüche**

1. Befestigungseinrichtung zum Anbringen der Beleuchtungseinrichtung an einem Zweirad, insbesondere einer Fahrradlampe, bestehend aus einer Befestigungsschelle, von der ein Ende zur Verbindung mit einem Gehäuse der Beleuchtungseinrichtung ausgeführt ist und deren anderes Ende zur Anbringung an einer Strebe eines Zweiradrahmens oder eines Zweiradzubehörteils ein von zwei Schenkeln gebildetes Maul aufweist, dadurch gekennzeichnet, daß das Maul (18) eine quer zu den Schenkeln (15, 16) verlaufende Klemmfläche (17) umfaßt, daß in jedem Schenkel (15, 16) eine Öffnung (22, 23) vorgesehen ist, daß die Öffnungen (22, 23), von denen wenigstens eine glattwandig und parallelflankig ausgebildet ist, aufeinander ausgerichtet sind, und daß ein keilförmig gestaltetes Klemmstück (25) in der glattwandigen Öffnung (22) sitzt und mittels einer durch die andere Öffnung (23) hindurchführenden Schraube (24) an den diese Öffnung (23) enthaltenden Schenkel (16) heranziehbar ist, wobei die Strebe (7) zwischen der Keilfläche und der Klemmfläche (17) eingeklemmt ist.

2. Befestigungseinrichtung nach Anspruch 1, dadurch gekennzeichnet, daß das Maul (18) einen U-förmigen Querschnitt aufweist.

3. Befestigungseinrichtung nach Anspruch 1, dadurch gekennzeichnet, daß die Schenkel (15, 16) an ihren einander gegenüberliegenden Innenseiten mit im wesentlichen ebenen Flächen (19, 20) ausgebildet sind, und daß die Klemmfläche (17) halbzylindrisch oder prismatisch geformt ist.

4. Befestigungseinrichtung nach Anspruch 1, dadurch gekennzeichnet, daß die Breite des Mauls (18) größer als dessen Weite (21) ist.

5. Befestigungseinrichtung nach Anspruch 1, dadurch gekennzeichnet, daß die Keilfläche von einer Mantelfläche eines kegelstumpfförmig geformten Klemmstücks (25) gebildet ist, das vorzugsweise an seinem dickeren Ende in einen zylindrischen Abschnitt (26) gleichen Durchmessers übergeht und eine konzentrische Gewindebohrung (27) für die Klemmschraube (24) enthält.

6. Befestigungseinrichtung nach Anspruch 1, dadurch gekennzeichnet, daß die entsprechende Öffnung (22) in dem jeweiligen Schenkel (15) in ihrem Querschnitt dem Querschnitt des darin sitzenden Klemmstücks (25) entspricht.

7. Befestigungseinrichtung nach Anspruch 1, dadurch gekennzeichnet, daß die Befestigungsschelle aus einem Strangpreßprofil besteht.

8. Befestigungseinrichtung nach Anspruch 1, dadurch gekennzeichnet, daß das Material der Befestigungsschelle (13) Leichtmetall, vorzugsweise Aluminium ist.

9. Befestigungseinrichtung nach Anspruch 1, dadurch gekennzeichnet, daß das Klemmstück (25) aus vorzugsweise rostfreiem Stahl besteht.

10. Befestigungseinrichtung nach Anspruch 1, dadurch gekennzeichnet, daß die Befestigungsschelle (13) an ihrem dem Gehäuse (9) zugekehrten Enden (28) zwei zueinander rechtwinklig verlaufende Bohrungen (29,31) zur Aufnahme einer Befestigungsschraube (12) aufweist, und daß jede Bohrung (29, 31) von einer zu ihr rechtwinklig verlaufenden Anlagefläche (32, 33) für eine an dem Gehäuse (9) angebrachten Lasche (11) umgeben ist.

**Revendications**

1. Dispositif de fixation pour fixer le dispositif d'éclairage sur une bicyclette, en particulier une lampe de bicyclette, comprenant un collier de fixation dont une extrémité est réalisée pour le raccordement à un corps du dispositif d'éclairage et dont l'autre extrémité comporte une mâchoire constituée de deux branches pour le raccordement à une entretoise d'un cadre ou d'une pièce accessoire de bicyclette, caractérisé par le fait que la mâchoire (18) présente une surface de serrage (17) disposée transversalement aux branches (15, 16), que dans chaque branche (15, 16) est pratiqué un perçage (22, 23), que les perçages (22, 23), dont au moins un est réalisé à paroi lisse et à flancs parallèles, sont ajustés l'un par rapport à l'autre et qu'une pièce de blocage (25) en forme de coin est insérée dans le perçage (22) à paroi lisse et, au moyen d'une vis (24), traversant l'autre perçage (23), peut être tirée contre la branche (16) contenant ce perçage (23), l'entretoise (7) étant serrée entre la surface de calage conique et la surface de serrage (17).

2. Dispositif de fixation selon la revendication 1, caractérisé par le fait que la mâchoire (18) a une section transversale en forme de U.

3. Dispositif de fixation selon la revendication 1, caractérisé par le fait que les branches (15, 16), sur leurs faces internes en regard l'une de l'autre, sont réalisées avec des surfaces (19, 20) sensiblement planes et que la surface de serrage (17) est de forme semi-cylindrique ou prismatique.

4. Dispositif de fixation selon la revendication 1, caractérisé par le fait que la largeur de la mâchoire (18) est plus grande que sa largeur intérieure (21).

5. Dispositif de fixation selon la revendication 1, caractérisé par le fait que la surface de conique est formée par une surface latérale d'une pièce de blocage (25) en forme de tronc de cône qui, de préférence au niveau de son extrémité la plus épaisse, se transforme en une section cylindrique (26) de même diamètre et comporte un taraudage concentrique (27) pour la vis de serrage (24).

6. Dispositif de fixation selon la revendication 1, caractérisé par le fait que le perçage correspondant (22) dans la branche (15) à chaque fois considérée a une section transversale correspondant à la section transversale de la pièce de blocage (25) engagée à l'intérieur.

7. Dispositif de fixation selon la revendication 1, caractérisé par le fait que le collier de fixation est réalisé à partir d'un profilé filé.

8. Dispositif de fixation selon la revendication 1, caractérisé par le fait que le matériau du collier de fixation (13) est un métal léger, de préférence de l'aluminium.

9. Dispositif de fixation selon la revendication 1, caractérisé par le fait que la pièce de blocage (25) est de préférence réalisée en acier inoxydable.

10. Dispositif de fixation selon la revendication 1, caractérisé par le fait que le collier de fixation (13) à son extrémité (28) située du côté du corps (9), comporte deux perçages (29, 31), disposés perpendiculairement l'un par rapport à l'autre, pour recevoir une vis de fixation (12), et que chaque perçage (29, 31) est entouré d'une surface d'application (32, 33) disposée perpendiculairement par rapport à lui et destinée à une patte (11) assujettie au corps (9).

## Claims

1. An attaching device for the attachment of the lighting device to a bicycle, more particularly a bicycle lamp, comprising an attaching clamp, one end of which is constructed for connection to a casing of the lighting device, its other end having a mouth, formed by two arms, for attachment to a strut of a bicycle frame or a bicycle accessory, characterized in that the mouth (18) comprises a clamping face (17) extending transversely of the arms (15, 16); each arm (15, 16) is formed with an opening (22, 23); the openings (22, 23), at least one of which is constructed with smooth walls and parallel flanks, are aligned with one another; and a wedge-shaped clamping member (25) is disposed in the smooth-walled opening (22) and can be drawn by means of a screw (24) extending through the other opening (23) against the arm (16) containing said aperture (23), the strut (7) being clamped between the wedge face and the clamping face (17).

2. An attaching device according to claim 1, characterized in that the mouth (18) has a U-shaped cross-section.

3. An attaching device according to claim 1, characterized in that the arms (15, 16) are constructed with facing inner sides having substantially flat faces (19, 20), the clamping face (17) being semi-cylindrical or prismatic in shape.

4. An attaching device according to claim 1, characterized in that the breadth (18) of the mouth is greater than its width (21).

5. An attaching device according to claim 1, characterized in that the wedge face is formed by a generated surface of a frustoconical clamping member (25) which preferably at its thicker end merges into a cylindrical portion (26) of equal diameter and is formed with a concentric screw-threaded bore (27) for the clamping screw (24).

6. An attaching device according to claim 1, characterized in that the cross-section of the corresponding opening (22) in the particular arm (15) corresponds to the cross-section of the clamping member (25) disposed therein.

7. An attaching device according to claim 1, characterized in that the attaching clamp consists of a continuously pressed section.

8. An attaching device according to claim 1, characterized in that the material of the attaching clamp (13) is a light metal, preferably aluminium.

9. An attaching device according to claim 1, characterized in that the clamping member (25) is preferably made of stainless steel.

10. An attaching device according to claim 1, characterized in that at its ends (28) adjacent the casing (9) the attaching clamp (13) is formed with two bores (29, 31) extending at right angles to one another to receive an attaching screw (12), and each bore (29, 31) is enclosed by a bearing face (32, 33) extending at right angles thereto for a strap (11) disposed on the casing (9).

Fig. 1

Fig. 2

Fig. 3